(19) Europäisches Patentamt

European Patent Office

Office européen des brevets

(11) Veröffentlichungsnummer: **0 208 967**
**B1**

(12) **EUROPÄISCHE PATENTSCHRIFT**

(45) Veröffentlichungstag der Patentschrift:
20.06.90

(21) Anmeldenummer: 86108746.8

(22) Anmeldetag: 26.06.86

(51) Int. Cl.⁵: **H02P 5/402, G01P 3/48**

(54) **Anordnung zur lastabhängigen Leistungsregelung eines Asynchronmotors.**

(30) Priorität: 09.07.85 DE 3524485

(43) Veröffentlichungstag der Anmeldung:
21.01.87 Patentblatt 87/4

(45) Bekanntmachung des Hinweises auf die Patenterteilung:
20.06.90 Patentblatt 90/25

(84) Benannte Vertragsstaaten:
DE GB

(56) Entgegenhaltungen:
EP-A- 0 079 035
EP-A- 0 149 217
DE-A- 3 022 434
DE-A- 3 102 655
US-A- 4 143 289
US-A- 4 495 448

IEEE TRANSACTIONS ON INDUSTRZ APPLICATIONS,
Band IA-19, Nr. 6, November/December 1983,
Seiten 1031-1035, IEEE, New York, US; J.W. TOMS:
"Applying solid-state energy-saver starters"

(73) Patentinhaber: Siemens Aktiengesellschaft,
Wittelsbacherplatz 2, D-8000 München 2(DE)

(72) Erfinder: Elsner, Norbert, Kiefernweg 1,
D-8526 Bubenreuth(DE)
Erfinder: Güntner, Herwig, Dr.,
Wilhelm-Albrecht-Strasse 161, D-8540 Schwabach(DE)
Erfinder: Grosse-Wilde, Hubert, Dr.,
Staffelbergstrasse 4, D-8524 Neunkirchen(DE)
Erfinder: Haas, Wilfried, Dipl.-Phys., Huberweg 16,
D-8520 Erlangen(DE)

## Beschreibung

Die Erfindung bezieht sich auf eine Anordnung zur lastabhängigen Leistungsregelung eines Asynchronmotors, in der steuerbare elektronische Schalter vorgesehen sind, denen ein Phasenanschnittsteuerkreis zugeordnet ist und bei der als Istwert für die Leistungsregelung die Schlupffrequenz des Asynchronmotors erfaßt wird. Der Phasenanschnittsteuerkreis mit seinen steuerbaren elektronischen Leistungsschaltern, vorzugsweise Thyristoren, und seiner zugeordneten Regeleinrichtung ist bekannt unter der Bezeichnung Motorstromsteller (motor controller).

Als Stellgröße für die Leistungsregelung der Asynchronmotoren wird der Zündwinkel der elektronischen Schalter verwendet. Als Regelgröße kann sowohl der Motorleistungsfaktor als auch der Schlupf vorgesehen sein. Die Schlupfregelung verwendet die bekannte Tatsache, daß sich der Motorschlupf bis zu etwa 1,4facher Überlast proportional mit der Motorlast ändert. Die Motorspannung kann somit etwa proportional der Differenz zwischen der Drehzahl bei Nennlast und der synchronen Drehzahl eingestellt werden. Diese Regelung kann verwendet werden zur Strombegrenzung beim Motoranlauf (IEEE Transactions on Ind. Appl., Vol. IA-19, No. 6, Nov./Dez. 1983, Seiten 1031 bis 1035).

Man kann diese elektronischen Schütze mit einem Phasenanschnittsteuerkreis auch verwenden zur lastabhängigen Leistungsregelung, d.h. zur Energieersparnis, wenn bei Teillast nur eine entsprechend geringe Energie benötigt wird. Bei Nennlast und entsprechendem Nennschlupf $f_S^N$ ist der Zündwinkel für die Halbleiterschalter, vorzugsweise Thyristoren, klein. Mit abnehmender Belastung und damit abnehmendem Schlupf $f_S$ wird ein entsprechend größerer Zündwinkel eingestellt und damit die dem Asynchronmotor zugeführte Spannungszeitfläche entsprechend vermindert (FE, Fairford Electronics Ltd.: Fairfordsystem, 3 MC Module, Digital 3 Phase Induction Motor Controller, Application Handbook).

Es ist ferner bekannt, daß zur Drehzahlregelung von Wechselstrommotoren mit steuerbaren elektronischen Schaltern, denen ein Phasenanschnittsteuerkreis zugeordnet ist, induktive Meßwertaufnehmer verwendet werden können. Dieser induktive Meßwertaufnehmer kann außen am Motorgehäuse im Bereich des Streufeldes angeordnet sein. Er enthält drei einzelne Spulen, denen eine Elektronik zugeordnet ist. In dieser Anordnung wird aus dem Streufeld elektronisch durch Rückkopplung eine Oberwelle herausgefiltert, die ein Vielfaches der Motordrehzahl beträgt. Diese Anordnung erfordert einen verhältnismäßig großen Aufwand (US-Patent 4 495 448).

Der Erfindung liegt nun die Aufgabe zugrunde, eine Anordnung zur lastabhängigen Leistungsregelung eines Asynchronmotors, der mit einem Motorstromsteller versehen ist, anzugeben, bei der die Schlupffrequenz des Asynchronmotors in einfacher Weise direkt erfaßt werden kann.

Diese Aufgabe wird erfindungsgemäß gelöst mit den kennzeichnenden Merkmalen der Ansprüche 1 oder 2. Durch das nichtlineare Frequenzverhalten des Massiveisenkerns in Verbindung mit dem Dämpfungsmantel werden die Netzfrequenz und die Drehfrequenz unterdrückt, so daß man mit einem einfachen Tiefpaßfilter die Schlupffrequenz dem Gebersignal direkt entnehmen kann.

Der auf dem Motorgehäuse im Bereich des Streufeldes der Ständerwicklung angeordnete induktive Aufnehmer erhält das Streufeld aus der Netzfrequenz und einer Frequenz aus der Rückwirkung des Läufers, der mit der Motordrehzahl umläuft. Dieses Streufeld enthält als Schwebungsfrequenz die Schlupffrequenz, die Amplitude des vom Meßwertaufnehmer gelieferten Gebersignals ist somit moduliert mit der Schlupffrequenz, d. i. die Differenz von synchroner Drehzahl und Motordrehzahl. Diese wird mit dem Tiefpaßfilter ausgefiltert und dem Regelkreis für die Anschnittsteuerung als Istwert vorgegeben. Durch den Massiveisenkern und den Dämpfungsmantel werden die Netzfrequenz und Drehfrequenz unterdrückt, so daß die Schlupffrequenz im Gebersignal dominierend ist.

Als induktiver Meßwertaufnehmer ist ferner eine gekapselte Hallsonde geeignet, die vorzugsweise mit einem Dämpfungsmantel aus elektrisch leitendem, jedoch unmagnetischem Material versehen ist, und dem ein Tiefpaßfilter zugeordnet ist.

Weitere besonders vorteilhafte Ausgestaltungen der Anordnung ergeben sich aus den Unteransprüchen.

Zur weiteren Erläuterung der Erfindung wird auf die Zeichnung Bezug genommen, in der zwei Ausführungsbeispiele für Anordnungen zur lastabhängigen Leistungsregelung eines Asynchronmotors nach der Erfindung schematisch veranschaulicht sind. Figur 1 zeigt einen induktiven Meßwertaufnehmer und in Figur 2 ist ein Hallgenerator dargestellt, der als Meßwertaufnehmer verwendet werden kann. In Figur 3 ist die elektronische Verarbeitung des Ausgangssignals des induktiven Meßwertaufnehmers schematisch angedeutet.

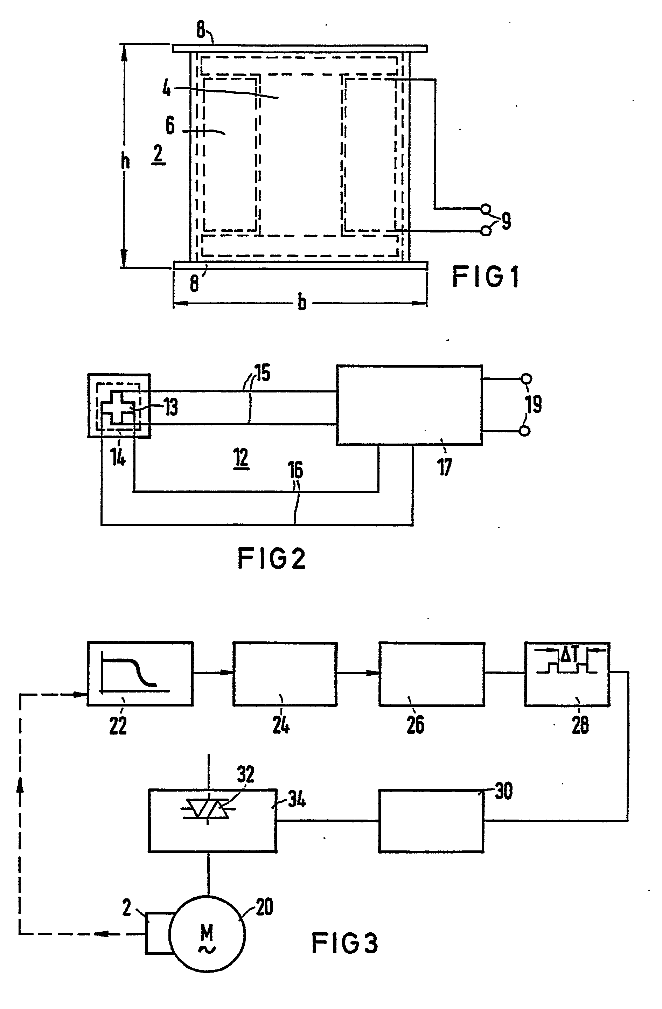

In der Ausführungsform nach Figur 1 enthält ein induktiver Meßwertaufnehmer 2 einen Massiveisenkern 4 in der Form eines I-Trägers, der mit einer Zylinderspule 6 und einem Dämpfungsmantel 8 versehen ist. Die Zylinderspule 6 ist zur Erhöhung der Empfindlichkeit mit einer hohen Windungszahl, vorzugsweise wenigstens 10 000 Windungen, insbesondere etwa 20 000 Windungen, versehen. Dieser Meßwertaufnehmer 2 hat nur eine geringe Ausdehnung, seine Höhe h kann beispielsweise etwa 50 mm und seine Breite b beispielsweise etwa 60 mm betragen. Der Dämpfungsmantel 8 besteht aus elektrisch leitendem, nichtmagnetischem Material, beispielsweise Aluminium, vorzugsweise Kupfer. Dieser induktive Meßwertaufnehmer 2 wird auf das Motorgehäuse im Bereich des Streufeldes der Ständerwicklung aufgesetzt und liefert an seinem Ausgang 9 ein Wechselspannungssignal, das die Schlupffrequenz als Schwebungsfrequenz enthält und von dem die Netzfrequenz, die bereits durch den Dämpfungsmantel 8 gedämpft ist, durch ein nachgeordnetes Tiefpaßfilter ausgefiltert wird.

Ferner ist als Meßwertaufnehmer 12 ein Hallgenerator 13 geeignet, der vorzugsweise mit einem Dämpfungsmantel 14 versehen werden kann. Der vom Hallgenerator 13 gelieferte Hallstrom und die Hallspannung werden jeweils über eine Leitung 15 bzw. 16 einer Elektronik 17 zugeführt, die an ihrem Ausgang 19 ein Gebersignal liefert, das mit der Schlupffrequenz moduliert ist und nach elektronischer Verarbeitung als Istwert für die Leistungsregelung verwendet werden kann.

In der Ausführungsform einer Anordnung zur lastabhängigen Leistungsregelung eines Asynchronmotors 20 nach Figur 3 ist dem induktiven Meßwertaufnehmer 2 ein Tiefpaßfilter 22 zugeordnet, das vorzugsweise ein Tiefpaß höherer Ordnung mit einer Grenzfrequenz von beispielsweise etwa 2/3 bis 4/5 der Netzfrequenz sein kann. Es befreit das zugeführte Signal von unerwünschten höherfrequenten Anteilen. Da die Amplitude des resultierenden Signals von der Schlupffrequenz abhängig ist, wird es mit Hilfe eines Komparators 24 in ein amplitudennormiertes Rechtecksignal umgeformt. Der Komparator 24 kann vorzugsweise ein Schmitt-Trigger sein. Anschließend erzeugen zwei parallelgeschaltete monostabile Kippstufen 26 eine Kette von Normimpulsen 28, deren zeitlicher Abstand $\Delta T$ umgekehrt proportional ist der doppelten Schlupffrequenz $2f_s$. Die Normimpulse 28 werden dem Phasenanschnittsteuerkreis 30 des Motors 20 für die Einstellung des Zündwinkels der Halbleiterschalter 32 eines Halbleiterschützes 34 vorgegeben. Mit der Belastung des Asynchronmotors 20 ändert sich der Schlupf $f_S$ und damit die Folgefrequenz der Normimpulse 28 und der Zündwinkel für die Halbleiterschalter 32 wird entsprechend verändert. Unter Umständen kann es zweckmäßig sein, den monostabilen Kippstufen 26 auch noch einen in der Figur nicht dargestellten Integrator nachzuschalten, dessen Ausgangssignal proportional zur Schlupffrequenz ist und nach dessen Höhe der Zündwinkel gewählt wird.

Bei verhältnismäßig schnellen zeitlichen Änderungen der Belastung des Asynchronmotors 20, insbesondere bei Laststößen, kann es zweckmäßig sein, zum Ausregeln der Laststöße dem Tiefpaßfilter 22 noch ein in der Figur nicht dargestelltes Hochpaßfilter nachzuschalten, das ein Überschwingen der Regelung verhindert und dessen Grenzfrequenz bei etwa 1/6 bis 1/5 der Nennschlupffrequenz liegt.

## Patentansprüche

1. Anordnung zur lastabhängigen Leistungsregelung eines Asynchronmotors (20), in der steuerbare elektronische Schalter (32) vorgesehen sind, denen ein Phasenanschnittsteuerkreis (30) zugeordnet ist, und bei der als Istwert für die Leistungsregelung die Schlupffrequenz des Asynchronmotors erfaßt wird, dadurch gekennzeichnet, daß zur Erfassung der Schlupffrequenz ein induktiver Meßwertaufnehmer (2) vorgesehen ist, der einen Massiveisenkern (4) und eine Zylinderspule (6) sowie einen Dämpfungsmantel (8) aus nichtmagnetischem Material enthält und der am Motorgehäuse im Bereich des Streufeldes der Ständerwicklung angeordnet ist und dem ein Tiefpaßfilter (22) zugeordnet ist, das ein mit der Schlupffrequenz des Motors (20) moduliertes Ausgangssignal als Steuerspannung für den Phasenanschnittsteuerkreis (30) liefert.

2. Anordnung zur lastabhängigen Leistungsregelung eines Asynchronmotors (20), in der steuerbare elektronische Schalter (32) vorgesehen sind, denen ein Phasenanschnittsteuerkreis (30) zugeordnet ist, und bei der als Istwert für die Leistungsregelung die Schlupffrequenz des Asynchronmotors erfaßt wird, dadurch gekennzeichnet, daß zur Erfassung der Schlupffrequenz ein Meßwertaufnehmer (12) vorgesehen ist, der eine gekapselte Hallsonde (13) enthält und der am Motorgehäuse im Bereich des Streufeldes der Ständerwicklung angeordnet ist und dem ein Tiefpaßfilter (22) zugeordnet ist, das ein mit der Schlupffrequenz des Motors (20) moduliertes Ausgangssignal als Steuerspannung für den Phasenanschnittsteuerkreis (20) liefert.

3. Anordnung nach Anspruch 2, dadurch gekennzeichnet, daß der Hallgenerator (13) mit einem Mantel (14) aus elektrisch leitendem, unmagnetischem Material versehen ist.

4. Anordnung nach Anspruch 1 oder 2, dadurch gekennzeichnet, daß dem Tiefpaßfilter (22) ein elektronischer Komparator (24) und zwei monostabile Kippstufen (20) nachgeschaltet sind.

5. Anordnung nach Anspruch 4, dadurch gekennzeichnet, daß als Komparator (24) ein Schmitt-Trigger vorgesehen ist.

6. Anordnung nach einem der Ansprüche 1 bis 5, dadurch gekennzeichnet, daß dem Tiefpaßfilter (22) noch ein Hochpaßfilter nachgeschaltet ist.

## Claims

1. Arrangement for the load-dependent power regulation of an asynchronous motor (20), in which arrangement controllable electronic switches (32), to which a phase control circuit (30) is assigned, are provided, and in which arrangement the slip frequency of the asynchronous motor is measured as the actual value for the power regulation, characterised in that, for the measurement of the slip frequency, an inductive measuring sensor (2) is provided which comprises a solid iron core (4) and a cylindrical coil (6), as well as a damping case (8) made of non-magnetic material, and which is arranged on the motor housing in the region of the leakage field of the stator winding, and to which a low-pass filter (22) is assigned which delivers an output signal, modulated by the slip frequency of the motor (20), as the control voltage for the phase control circuit (30).

2. Arrangement for the load-dependent power regulation of an asynchronous motor (20), in which arrangement controllable electronic switches (32), to which a phase control circuit (30) is assigned, are provided, and in which arrangement the slip frequency of the asynchronous motor is measured as the actual value for the power regulation, characterised in that, for the measurement of the slip frequency, a measuring sensor (12) is provided, which comprises an enclosed Hall probe (13) and is arranged on the motor housing in the region of the leakage field of the stator winding, and to which a low-pass filter (22) is assigned which delivers an output signal, modulated by the slip frequency of the motor (20), as the control voltage for the phase control circuit (20).

3. Arrangement according to claim 2, characterised in that the Hall generator (13) is provided with a casing (14) made of electrically conductive, non-magnetic material.

4. Arrangement according to claim 1 or 2, characterised in that an electronic comparator (24) and two monostable flip-flops (26) are connected after the low-pass filter (22).

5. Arrangement according to claim 4, characterised in that a Schmitt trigger is provided as the comparator (24).

6. Arrangement according to one of claims 1 to 5, characterised in that a high-pass filter is additionally connected after the low-pass filter (22).

**Revendications**

1. Dispositif de régulation de la puissance d'un moteur asynchrone (20) en fonction de la charge, dans lequel il est prévu des interrupteurs électroniques commandables (32), auxquels est associé un circuit de commande à découpage de phase (30) et dans lequel la fréquence de glissement du moteur asynchrone est détectée en tant que valeur réelle pour la régulation de la puissance, caractérisé par le fait que pour la détermination de la fréquence de glissement, il est prévu un capteur de mesure inductif (2), qui contient un noyau de fer massif (4) et une bobine cylindrique (6) ainsi qu'une enveloppe d'atténuation (8) réalisée en un matériau amagnétique et est installé sur le carter du moteur dans la zone du champ de fuite de l'enroulement statorique et auquel est associé un filtre passe-bas (22), qui délivre un signal de sortie modulé par la fréquence de glissement du moteur (20), en tant que tension de commande pour le circuit de commande à découpage de phase (30).

2. Dispositif de régulation de la puissance d'un moteur asynchrone (20) en fonction de la charge, dans lequel il est prévu des interrupteurs électroniques commandables (32), auxquels est associé un circuit de commande à découpage de phase (30) et dans lequel la fréquence de glissement du moteur asynchrone est détectée en tant que valeur réelle pour la régulation de la puissance, caractérisé par le fait que pour détecter la fréquence de glissement, il est prévu un capteur de mesure (12), qui contient une sonde de Hall (13) encapsulé et est disposé sur le carter du moteur, dans la zone du champ de fuite de l'enroulement statorique et auquel est associé un filtre passe-bas (22), qui délivre un signal de sortie modulé par la fréquence de glissement du moteur (20), en tant que tension de commande pour le circuit de commande à découpage de phase (20).

3. Dispositif suivant la revendication 2, caractérisé par le fait que le générateur de Hall (13) comporte une enveloppe (14) réalisée en un matériau amagnétique, conduisant le courant électrique.

4. Dispositif suivant la revendication 1 ou 2, caractérisé par le fait qu'un comparateur électronique (24) et deux étages à bascule monostable (26) sont branchés en aval du filtre passe-bas (22).

5. Dispositif suivant la revendication 4, caractérisé par le fait qu'il est prévu, comme comparateur (24), un déclencheur de Schmitt.

6. Dispositif suivant l'une des revendications 1 à 5, caractérisé par le fait qu'en outre un filtre passe-haut est branché en aval du filtre passe-bas (22).

FIG 1

FIG 2

FIG 3